# DEMANDE DE BREVET EUROPEEN

(11) **EP 1 010 455 A1**
(43) Date de publication de la demande: **21.06.2000**
(21) Numéro de dépôt: 99490042.1
(22) Date de dépôt: 07.12.1999
(51) Int. Cl.: B01D 61/44, C01B 25/165, C25B 1/00

(54) **Procédé de fabrication d'hypophosphite de nickel par technique electromembranaire**

(30) Priorité: 18.12.1998 FR 9816273
(71) Demandeur: Etablissements A. Richard, 95100 Argenteuil (FR)
(72) Inventeur: Richard, André Emile Joseph, 95100 Argenteuil (FR)
(74) Mandataire: Hénnion, Jean-Claude

(57) **Abrégé**

Le procédé de fabrication d'hypophosphite de nickel à partir d'une solution de sulfate de nickel hexahydraté et d'une solution d'hypophosphite de sodium monohydraté, par technique électromernbranaire , consiste :
a) à introduire respectivement la solution de sulfate de nickel hexahydraté et la solution d'hypophosphite de sodium monohydraté dans chacun des deux circuits de dilution (D₁, D₂) de cellules d'électrodialyse à quatre compartiments , formées par empilement alterné de membranes homopolaires cationiques (C) et anioniques (A) dans un électrodialyseur comportant une anode et une cathode insolubles,
b) à appliquer un courant électrique de l'anode vers la cathode , sans régulation de pH des solutions contenues dans les circuits de dilution et de concentration mais avec régulation de l'alimentation électrique , soit en tension soit en intensité , et
c) à récupérer une solution d'hypophosphite de nickel hexahydraté depuis l'un des circuits de concentration (C₂).

## Description

La présente invention concerne la fabrication d'hypophosphite de nickel dans des conditions permettant son utilisation directe comme seul constituant actif dans le procédé de nickelage chimique.

Le procédé de nickelage chimique met en oeuvre traditionnellement des sels de nickel et un hypophosphite, par exemple le sulfate hexahydraté de nickel et l'hypophosphite monohydraté de sodium. On a déjà préconisé de remplacer ces deux composés par un seul, à savoir l'hypophosphite de nickel. En effet, il s'avère que l'utilisation de ce seul composé conduit à augmenter la durée de vie des solutions de nickelage chimique et par conséquent diminuer les flux de pollution par le nickel ; de plus, cette nouvelle formulation conduit à une meilleure qualité des dépôts de nickel obtenus, notamment par une diminution des tensions internes.

On sait produire de l'hypophosphite de nickel en faisant réagir l'acide hypophosphoreux avec l'hydroxyde de nickel ou le carbonate de nickel ou un autre sel de nickel adéquat. Cette fabrication, purement chimique, est cependant fort coûteuse.

On a déjà proposé dans le document EP 693 577 de produire l'hypophosphite de nickel par un procédé mettant en oeuvre les étapes suivantes, à savoir de mettre en contact une anode de nickel avec une solution d'anions hypophosphite, d'appliquer un courant électrique depuis ladite anode jusqu'à une cathode elle-même en contact électrique avec ladite solution en sorte que le nickel de l'anode soit dissous dans la solution d'hypophosphite et forme une solution d'hypophosphite de nickel, de récupérer et de concentrer ladite solution d'hypophosphite de nickel.

Ce même procédé peut être mis en oeuvre dans une cellule d'électrodialyse à trois compartiments séparés par une membrane échangeuse d'ions, l'une cationique et l'autre anionique. Dans le récipient faisant office d'électrolyseur, le compartiment central contient une solution hyposulfite d'un métal alcalin ; il est séparé du compartiment contenant l'anode de nickel par une membrane anionique, c'est-à-dire une membrane permettant la diffusion des anions et empêchant la diffusion des cations ; de plus, il est séparé du compartiment de la cathode par une membrane cationique, c'est-à-dire une membrane permettant la diffusion des cations et empêchant la diffusion des anions. Les solutions contenues respectivement dans le compartiment anode (dénommé anolyte) et dans le compartiment cathode (dénommé catholyte) sont choisies pour être conductrices en sorte que le courant puisse passer dans les solutions dès que la tension est appliquée. Notamment, la solution anolytique contient de l'acide hypophosphoreux et la solution catolytique de la soude, tous deux à une concentration et un pH déterminés. L'hypophosphite de nickel se forme dans le compartiment contenant la solution anolytique.

Dans le document US.5,716,512, on a déjà proposé un procédé et une installation de fabrication d'hypophosphite de nickel à partir d'une solution de sulfate de nickel et d'une solution d'hypophosphite de sodium par technique électromembranaire . Dans l'exemple 8, illustré à la figure 9 de ce document, les deux électrodes étaient insolubles, une seconde cellule apportant à la première l'anolyte dans des conditions comparables à celles qui étaient obtenues , dans l'exemple 1 , à partir d'une anode de nickel soluble. Dans ce procédé était prévu un régulateur de pH en sorte d'activer ou de désactiver la cellule d'électrodialyse pour ajuster et contrôler le pH au moins du premier électolyte. Ce contrôle du pH des solutions contenues dans les divers compartiments de la première cellule a sans aucun doute pour but d'éviter la précipitation intempestive et préjudiciable de l'hydroxyde de nickel au niveau de l'interface des différentes membranes.

Le but que s'est fixé le demandeur est de proposer un procédé de fabrication d'hypophosphite de nickel, mettant en oeuvre une autre technique électromembranaire que celle décrite dans le document EP 693 577, l'électrodialyse ne nécessitant pas l'utilisation d'anode soluble en nickel et que celle décrite dans le document US.5,716,512, l'électrodialyse ne nécessitant pas de régulation du pH des solutions. Ce but est parfaitement atteint par le procédé de l'invention qui consiste :
a) à introduire respectivement une solution de sulfate de nickel hexahydraté et une solution d'hypophosphite de sodium monohydraté dans chacun des deux circuits de dilution de cellules d'électrodialyse de double substitution à quatre compartiments, formées par empilement de membranes homopolaires, alternativement cationiques et anioniques dans un électrodialyseur comportant une anode et une cathode insolubles.
b) à appliquer un courant électrique de l'anode vers la cathode, sans régulation de pH des solutions contenues dans les circuits de dilution et de concentration mais avec régulation de l'alimentation électrique , soit en tension soit en intensité.
c) à récupérer une solution d'hypophosphite de nickel hexahydraté depuis l'un des circuits de concentration.

Ainsi, selon le procédé de l'invention, il n'y a pas de réactions électrochimiques au niveau des électrodes, en particulier pas de dissolution de l'anode. Par le jeu des transports ioniques membranaires, on réalise une double décomposition des sels de départ, à savoir l'hypophosphite de sodium et le sulfate de nickel, qui aboutit à une double recombinaison des couples d'ions, à savoir d'une part l'hypophosphite de nickel et le sulfate de sodium. De préférence, l'anode est en titane platiné et la cathode est en acier inoxydable.

S'agissant du document US.5,716,512, l'installation visée dans l'exemple 8 illustré à la figure 9 ne met pas en oeuvre des cellules d'électrodialyse à quatre compartiments, formées par empilement alterné de membranes et homoplaires cationiques et anioniques ; en effet même si l'on peut déceler , sur la figure 9, quatre compartiments C1 à C4, ces quatre compartiments comprennent les deux compartiments à électrodes et ne sont séparés que par trois membranes , deux cationiques et une anionique.

On entend par régulation de l'alimentation électrique le fait d'encadrer les paramètres électriques de l'électrodialyse de telle sorte qu'à aucun moment pendant le déroulement du procédé de l'invention on ne constate de précipitation d'hydroxyde de nickel au niveau de l'interface des membranes.

Plus particulièrement la tension électrique appliquée entre les cellules doit impérativement être inférieure à 18 volts sous peine de faire précipiter l'hydroxyde de nickel voire même d'endommager les membranes.

S'agissant d'un procédé de fabrication discontinu , au cours duquel on cherche à augmenter la concentration de la solution d'hypophosphite de nickel , on coupe l'alimentation électrique quand la tension affichée est égale à 18 volts.

Partant d'une solution d'hypophosphite de nickel à 1,1g/l, après un temps de fonctionnement l'ordre de 4O5 à 415mn, la solution d'hypophosphite de nickel obtenue a une concentration de l'ordre de 2O2 à 212 g/l.

Le courant appliqué dans l'électrodialyseur, lors de la mise en oeuvre du procédé, a une densité de courant pouvant aller jusqu'à 150 ampères/m², pour une densité de tension pouvant aller jusqu'à 5 volts par cellule.

De préférence, la concentration de la solution de sulfate de nickel hexahydraté dans le premier circuit de dilution varie entre 0 et 2M, la concentration de la solution d'hypophosphite de sodium monohydraté dans le second circuit de dilution varie de 0 à 4M, la concentration de la solution de sulfate de sodium obtenue dans le premier circuit de concentration varie de 0 à 1M tandis que la concentration de la solution d'hypophosphite de nickel hexahydraté obtenue dans le second circuit de concentration varie de 0 à 1M. Les deux électrodes sont disposées dans des compartiments électrodes qui sont séparés des compartiments d'électrodialyse par une membrane cationique, le compartiment anode étant en regard d'une membrane anionique et le compartiment cathode en regard d'une membrane cationique.

Les deux compartiments électrodes sont chargés avec une solution de sulfate de sodium , qui constitue l'électrolyte conducteur du courant pour l'électrodialyse dans les différentes cellules. Au cours de l'électrodialyse, les deux compartiments électrodes constituent des réceptacles pour le transfert des ions sodium pour le compartiment cathodique et des ions sulfate pour le compartiment anionique. On transfère donc dans ces deux compartiments d'électrodes en cours d'électrodialyse des ions identiques qui en se recombinant induisent des variations de concentration en sulfate de soude dans ces deux compartiments , à savoir diminution de la concentration en sulfate de soude dans le compartiment cathodique et augmentation de la concentration en sulfate de soude dans le compartiment anodique.

Lorsque le procédé de fabrication d'hypophosphite de nickel selon l'invention est mis en oeuvre comme un procédé de fabrication en continu , on prélève périodiquement une certaine quantité de solution concentrée d'hypophosphite de nickel hexa-hydratée depuis le circuit de concentration correspondant (C2) et on introduit périodiquement une certaine quantité de solution de sulfate de nickel hexa-hydratée et d'hypophosphite de sodium dans les deux circuits de dilution D1, D2 de manière à maintenir dans le circuit de concentration (C₂) une conductivité électrique prédéterminée.

Lorsque l'on cherche à fabriquer une solution concentrée d'hypophosphite de nickel à 167g/l , la conductivité de la solution concentrée à 167g/l d'hypophosphite de nickel est de 35mS.

La présente invention sera mieux comprise à la lecture de la description qui va être faite d'un exemple préféré de mise en oeuvre du procédé de fabrication d'hypophosphite de nickel par technique électromembranaire, illustrée par le dessin annexé dans lequel :
- la figure 1 est une représentation schématique d'un empilement des membranes dans l'électrodialyseur avec cinq cellules de quatre compartiments,
- la figure 2 est une représentation schématique d'un compartiment illustrant les transferts ioniques mis en jeu et
- la figure 3 est une courbe donnant la conductivité en fonction du temps pour une fabrication en continue d'hypophosphite de nickel concentré à 167g/l.

Le procédé de l'invention pour la fabrication d'une solution d'hypophosphite de nickel hexahydraté, dans des conditions permettant son utilisation directe comme seul constituant actif dans le procédé de nickelage chimique, est mis en oeuvre à l'aide d'un électrodialyseur dont la structure est conventionnelle, avec son empilement de membranes et de cadres séparateurs, ses blocs d'adduction porte-électrodes, ses deux électrodes, ses plaques de serrage, ses circuits de circulation des solutions.

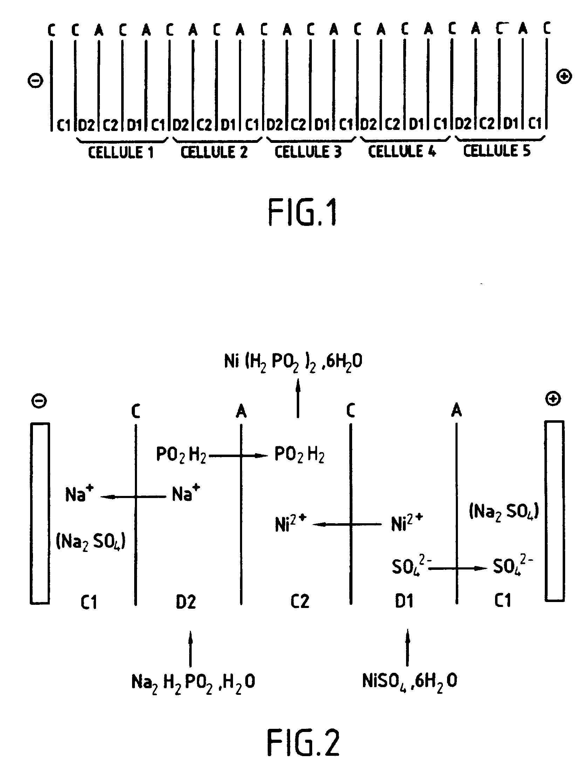

Dans le cas présent, l'anode et la cathode sont choisies insolubles, chaque cellule d'électrodialyse est à quatre compartiments, formés par l'empilement alterné de deux membranes cationiques (C) et deux membranes anioniques (A), comme représenté sur la figure 1. Si l'on considère le sens du courant (flèche I), allant de l'anode vers la cathode, on a donc, pour chaque cellule, l'empilement d'une première membrane anionique A, d'une première membrane cationique C, d'une seconde membrane anionique A et d'une seconde membrane cationique C.

Les compartiments anode et cathode, qui encadrent l'empilement de toutes les cellules, sont séparés de celui-ci par, chacun, une membrane cationique C.

L'espace entre deux membranes A, C d'une même cellule délimite un circuit de circulation d'une solution. On dénomme circuit de dilution un compartiment, c'est-à-dire un intervalle entre deux membranes, dans lequel l'électrodialyse se traduit par l'extraction d'électrolyte du compartiment, tandis que l'on dénomme par circuit de concentration un compartiment dans lequel l'électrolyse se traduit par une accumulation d'électrolyte. Dans chaque cellule à quatre compartiments, il y a deux circuits de dilution D₁, D₂ et deux circuits de concentration C₁ , C₂. Les circuits de dilution sont ceux qui ont une membrane anionique A en amont du compartiment par rapport au sens du courant électrique I ; en effet, les cations, migrant dans le sens du courant, ne peuvent pas pénétrer dans le compartiment mais peuvent en sortir ; il en est de même des anions, migrant en sens inverse. Les circuits de concentration C₁ , C₂ sont ceux dont la membrane amont du compartiment, par rapport au sens du courant électrique I, est une membrane cationique C. Les anions migrant dans le sens du courant peuvent pénétrer dans ce compartiment et ne peuvent pas en sortir. Il en est de même des anions migrant en sens inverse.

Les compartiments électrodes E₁ , E₂ et le premier circuit de concentration C₁ étant préalablement chargés de sulfate de sodium à une concentration de l'ordre de 20 g/l, comme électrolyte, on introduit une solution de sulfate de nickel hexahydraté dans le premier circuit de dilution D₁ , une solution d'hypophosphite de sodium monohydraté dans le second circuit de dilution D₂ et une solution diluée d'hypophosphite de nickel dans le second circuit de concentration C₂ de chaque cellule d'électrodialyse , puis on récupère après un certain temps l'hypophosphite de nickel hexahydraté concentré depuis le second circuit de concentration C₂. Aucune régulation du pH des solutions contenues dans les circuits de dilution et/ou de concentration n'est prévue.

Comme illustré à la figure 2, la solution de sulfate de nickel qui est introduite dans le premier circuit de dilution D1 est dissociée en cations Ni²⁺ et en anions SO₄²⁻ . Compte tenu du sens du courant I, le cation Ni²⁺ migre à travers la membrane cationique C et pénètre dans le second circuit de concentration C₂ disposé en aval par rapport au sens du courant, tandis que l'anion SO₄²⁻ migre à travers la membrane anionique A et pénètre dans le premier circuit de concentration C₁ disposé en amont.

La solution d'hypophosphite de sodium qui est introduite dans le second circuit de dilution D2 est dissociée en cations Na⁺ et en anions PO₂H⁻₂. Le cation Na⁺ migre à travers la membrane cationique et pénètre dans le circuit de concentration disposé en aval par rapport au sens du courant et qui est le premier circuit de concentration C₁ de la cellule adjacente. L'anion hypophosphite PO₂H⁻₂₋ migre à travers la membrane anionique et pénètre dans le second circuit de concentration C₂, qui est disposé en amont.

Dans le premier circuit de concentration C₁, on a recombinaison des cations Na⁺ et des anions SO₄²⁻ tandis que dans le second circuit de concentration C2, on a recombinaison des cations Ni²⁺ et des anions PO₂H⁻₂. C'est donc dans le second circuit de concentration C2 que se forme l'hypophosphite de nickel qui en l'occurrence est hexahydraté.

A titre d'exemple non exhaustif, les résultats suivants ont été obtenus sur un petit électrodialyseur à cinq cellules, selon le schéma d'empilement illustré à la figure 1, mettant en oeuvre douze membranes cationiques et dix membranes anioniques pour une surface active unitaire de 2dm² par membrane. L'anode était en titane platiné et la cathode en acier inoxydable du type Sus.316. Le débit de circulation des solutions dans chaque circuit, y compris les deux compartiments électrodes pouvait varier entre 0 et 500 l/h. La densité du courant pouvait varier entre 0 et 150 ampères/m² et la densité de tension entre 0 et 5 volts par cellule. Le procédé a été mis en oeuvre avec une alimentation électrique soit régulée en tension soit régulée en intensité.

Les concentrations maximales des solutions de sulfate de nickel et d'hypophosphite de sodium, alimentant les premiers et seconds circuits de dilution D1 et D2 étaient respectivement de 2 et 4M (mole par litre). La concentration maximale de la solution d'hypophosphite de nickel hexahydraté obtenue depuis le second circuit de concentration C2 était de 1M, de même d'ailleurs que celle du sulfate de sodium obtenu depuis le premier circuit de concentration C1.

L'électrolyte mis en oeuvre, à savoir le sulfate de sodium avait une concentration de 20 g/l.

Dans les conditions précitées, le rendement de fabrication de l'hypophosphite de nickel hexahydraté était au minimum de 86 % . Son pH était compris entre 3 et 6.

La concentration d'hypophosphite de nickel hexahydraté dans l'eau fabriqué par ce procédé d'électrodialyse, est définie préalablement par le calcul des concentrations des solutions mères de sulfate de nickel hexahydraté (1 à 500 g/l) et d'hypophosphite de sodium monohydraté (1 à 400 g/l) dans l'eau.

Les solutions d'hypophosphite de nickel hexahydraté dans l'eau obtenues par le procédé de l'invention, à toutes concentrations, sont utilisables directement dans les formulations de bains de nickelage chimique, en remplacement total ou partiel du sulfate de nickel hexahydraté et de l'hypophosphite de sodium monohydraté.

Dans le premier exemple de mise en oeuvre qui va être maintenant décrit, le procédé est du type discontinu, dans la mesure où le prélèvement de la solution d'hypophosphite de nickel se fait en une seule fois à l'issue d'un temps de fonctionnement déterminé, suffisant pour obtenir la concentration recherchée.

On prépare quatre litres de sulfate de sodium à partir d'eau déminéralisée, chauffée à environ 4O°C, jusqu'à obtenir une conductivité comprise entre 2O et 22mS, de préférence 2O,3mS , ce qui correspond à environ 2Og/l de sulfate de sodium. Deux litres de cette solution sont introduits dans la cuve réservée à l'électrolyte, c'est-à-dire au premier circuit de concentration C₁, et deux litres dans la cuve de concentration du sulfate de sodium , c'est-à-dire les deux compartiments électrodes.

On prépare une solution de sulfate de nickel hexa-hydraté à partir de 2,5 litres d'eau déminéralisée et de 418g plus ou moins un gramme de sulfate de nickel. Cette solution est introduite dans la cuve de dilution, correspondant au premier circuit de dilution D₁.

On prépare une solution d'hypophosphite de sodium monohydraté à partir de 2,5 litres d'eau déminéralisée et de 517 grammes plus ou moins un gramme d'hypophosphite de sodium. Cette solution est introduite dans la cuve de dilution correspondant au second circuit de dilution D₂.

On prépare une solution diluée d'hypophosphite de nickel hexa-hydraté à partir d'1,5 litre d'eau déminéralisée et de 1,67g d'hypophosphite de nickel. Cette solution est introduite dans la cuve de concentration correspondant au second circuit de concentration C₂.

On règle les débitmètres à 100 l/h pour les solutions correspondant aux deux circuits de dilution D₁ et D₂ et au second circuit de concentration C₂ et à 15O l/h pour l'électrolyte. Après stabilisation des débits, on met la tension électrique au maximum et l'intensité électrique au minimum de l'alimentation stabilisée. On met le courant et on règle l'intensité sur trois ampères. On mesure régulièrement la conductivité de la solution de sulfate de nickel , de manière à ce qu'elle reste comprise entre 2O et 22mS. Le transfert ionique correspondant à la concentration de la solution d'hypophosphite de nickel s'effectue en 41O minutes plus ou moins 5 minutes. Au cours de cette période , la tension électrique qui était au démarrage d'environ 14 à 15 volts s'est stabilisée à 8/8,5 volts pour remonter à 18 volts pendant la dernière heure. On coupe l'alimentation stabilisée lorsque la tension affichée est égale à 18 volts. La solution d'hypophosphite de nickel obtenue a une concentration comprise entre 2O2 et 212 g/l, ce qui équivaut à 41 g/l plus ou moins 1 g/l de nickel. Le rendement obtenu est de l'ordre de 95%.

La solution d'hypophosphite de nickel concentré obtenue en fin d'opération est à une température comprise entre 31 et 33°C. A cette concentration l'hypophosphite de nickel ne reste pas en solution à la température ambiante. Pour conserver cette solution concentrée , il faut la maintenir à une température comprise entre 3O et 4O °C. Il est également possible de ne la réchauffer que lors de son utilisation. Une autre voie possible est de diluer cette solution de manière à ce que l'hypophosphite de nickel soit soluble à température ambiante. Ceci est par exemple le cas avec une concentration d'hypophosphite de nickel hexa-hydraté de 167g/l.

Dans le second exemple de réalisation , le procédé de fabrication d'hypophosphite de nickel hexa-hydraté est un procédé continu, la solution concentrée d'hypophosphite de nickel étant prélevée périodiquemenr lorsque la conductivité de la solution d'hypophosphite de nickel a une valeur proche d'une valeur prédéterminée, correspondant à la concentration recherchée, tandis que l'on ajoute également périodiquement des solutions de sulfate de nickel et d'hypophosphite de sodium .

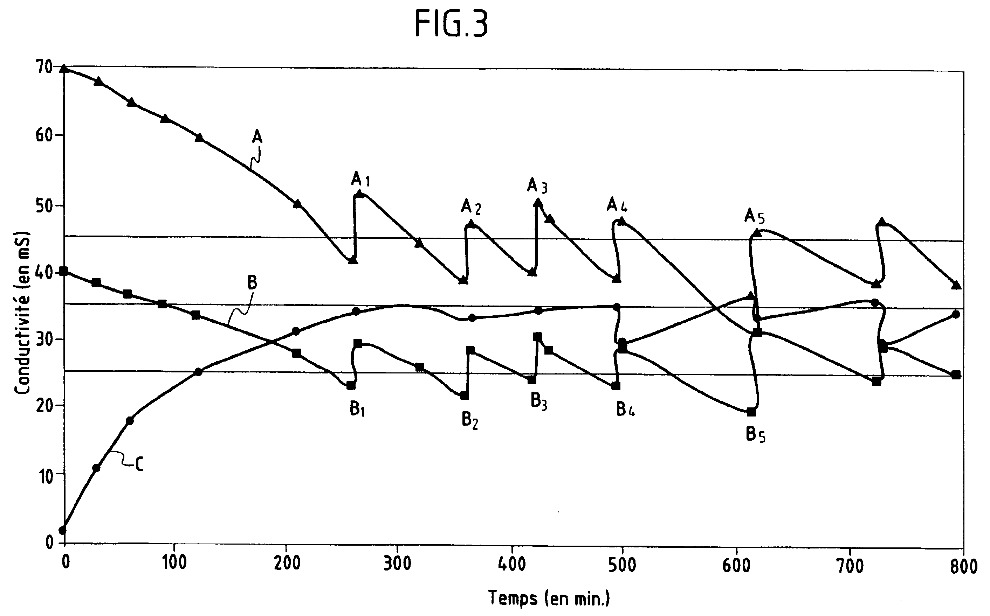

On a représenté sur la figure 3 trois courbes illustrant (A) la conductivité des solutions d'hypophosphite de sodium mono-hydraté B, de sulfate de nickel hexa-hydraté (C) et d'hypophosphite de nickel hexa-hydraté en fonction du temps.

On constate que la conductivité des différentes solutions évolue en fonction de leur concentration en ions. Au démarrage la solution à 3OOg/l d'hypophosphite de sodium hexa-hydraté avait une conductivité de l'ordre de 7OmS et la solution de sulfate de nickel hexa-hydraté à 4OOg/l une conductivité de l'ordre de 4OmS. Quant à la solution diluée d'hypophosphite de nickel , à 1,1g/l, sa conductivité était de l'ordre de 2mS.

On cherche à fabriquer une solution concentrée d'hypophosphite de nickel hexahydratée à 167 g/l dont le pH est compris entre 3 et 6. Cette concentration en sel correspond à la limite de solubilité dans l'eau de l'hypophosphite de nickel, elle permet ainsi le stockage du produit sans précipitation de sel dans le temps et sans risque de réduction intempestive des ions nickel par l'ion réducteur hypophosphite au sein de la solution. La conductivité de la solution concentrée à 167 g/l d'hypophosphite de nickel est égale à 35mS. C'est donc lorsque la conductivité mesurée pour le circuit de concentration C₂ a atteint cette valeur qu'a été ajouté dans les deux circuits de dilution D₁ , D₂ , un complément de solution concentrée de sulfate de nickel et d'hypophosphite de sodium, de 25Oml chacun dans l'exemple précis de réalisation de l'électrodialyseur. Ces ajouts ont pour effet d'augmenter immédiatement la conductivité desdites solutions , ce qui se traduit sur les courbes (A) et (B) par des pics (A1,B1). Lorsque la conductivité de la solution du second circuit de concentration C₂ a atteint la valeur de 35mS, on extrait dudit circuit une certaine quantité de solution ,par exemple un litre et on injecte dans ledit circuit 500ml d'eau déminéralisée. Ceci intervient , dans l'exemple précis de réalisation , à 33O mn du démarrage de l'opération.

L'étape suivante consiste dans un second ajout de solution de sulfate de nickel et d'hypophosphite de sodium, entraînant de nouveaux pics (A2,B2). Toutes ces opérations d'ajouts et de prélèvements se succèdent pendant le procédé de fabrication en continu d'hypophosphite de nickel. Sur la figure 3, on a représenté six ajouts successifs pendant une période de 8OO mn. Les ajouts peuvent ne pas être à des intervalles de temps réguliers . En particulier entre les pics (A4) et (A5), il s'est écoulé deux heures et l'ajout correspondant à (A5) a été le double des précédents à savoir 500ml de sulfate de nickel et d'hypophosphite de sodium au lieu des 25Oml précités.

S'agissant des paramètres électriques , l'intensité était maintenue constante à 15O ampères / m² , tandis que la tension était variable. Cette tension qui était au démarrage de 15,2 volts est descendue progressivement en environ 2 heures pour se stabiliser autour de 7,2 à 7,4 volts . De son côté la température du bain se stabilisait autour de 37 - 38°C. En cas d'arrêt , notamment pour la nuit, la température du bain va décroître de sorte que la tension au redémarrage sera plus élevée par exemple de 8,8 volts pour une température de 25,8 °C. Par la suite , la tension et la température se stabiliseront comme indiqué précédemment.

Les prélèvements de la solution concentrée en hypophosphite de nickel hexa-hydraté interviennent lorsque la conductivité mesurée dans le second circuit de concentration C₂ atteint le seuil prédéterminé , à savoir dans le présent exemple de réalisation 35mS pour une concentration de 167g/l .

Quant aux ajouts des solutions de sulfate de nickel et d'hypophosphite de sodium, ils interviennent lorsque la conductivité des premier et second circuits de dilution D₁, D₂ descendent en-dessous des seuils prédéterminés , par exemple 25mS pour le premier circuit de dilution D₁ (sulfate de nickel) et 45mS pour le second circuit de dilution D₂ (hypophosphite de sodium). En pratique , comme cela apparaît sur la figure 2 , il importe que lors de l'ajout la valeur de la conductivité desdites solutions repasse au-dessus du seuil prédéterminé.

## Revendications

1. Procédé de fabrication d'hypophosphite de nickel à partir d'une solution de sulfate de nickel hexahydraté et d'une solution d'hypophosphite de sodium monohydraté, par technique électromembranaire, caractérisé en ce qu'il consiste :
a) à introduire respectivement la solution de sulfate de nickel hexahydraté et la solution d'hypophosphite de sodium monohydraté dans chacun des deux circuits de dilution (D₁, D₂) de cellules d'électrodialyse à quatre compartiments, formées par empilement alterné de membranes homopolaires cationiques (C) et anioniques (A) dans un électrodialyseur comportant une anode et une cathode insolubles,
b) à appliquer un courant électrique de l'anode vers la cathode, sans régulation de pH des solutions contenues dans les circuits de dilution et de concentration mais avec régulation de l'alimentation électrique, soit en tension soit en intensité, et
c) à récupérer une solution d'hypophosphite de nickel hexahydraté depuis l'un des circuits de concentration (C2).

2. Procédé selon la revendication 1 caractérisé en ce que la densité de courant appliquée peut aller jusqu'à 150 ampères/m², pour une densité de tension pouvant aller jusqu'à 5 volts par cellule.

3. Procédé selon l'une des revendications 1 ou 2, caractérisé en ce que la concentration de la solution de sulfate de nickel hexahydraté dans le premier circuit de dilution (D₁) varie entre 0 et 2M, la concentration de la solution d'hypophosphite de sodium monohydraté dans le second circuit de dilution (D₂) varie de 0 à 4M, la concentration de la solution de sulfate de sodium obtenue dans le premier circuit de concentration (C₁) varie de 0 à 1M tandis que la concentration de la solution d'hypophosphite de nickel hexahydraté obtenue dans le second circuit de concentration (C₂) varie de 0 à 1M.

4. Procédé selon l'une des revendications 1 à 3 caractérisé en ce que l'on charge les deux compartiments électrodes (E₁, E₂) avec une solution de sulfate de sodium, lesdits compartiments électrodes étant séparés des cellules d'électrodialyse par une membrane cationique, le compartiment anode (E₁) étant en regard d'une membrane anionique (A) et le compartiment cathode (E₂) en regard d'une membrane cationique (C).

5. Procédé selon l'une des revendications 1 à 4 , selon un fonctionnement discontinu, caractérisé en ce que on coupe l'alimentation électrique quand la tension électrique est égale à 18 volts.

6. Procédé selon la revendication 5 caractérisé en ce que partant d'une solution d'hypophosphite de nickel à 1,1 g/l , après un temps de fonctionnement l'ordre de 4O5 à 415mn, la solution d'hypophosphite de nickel obtenue a une concentration de l'ordre de 2O2 à 212 g/l.

7. Procédé selon l'une des revendications 1 à 4 selon un fonctionnement continu caractérisé en ce qu'on prélève périodiquement une certaine quantité de solution concentrée d'hypophosphite de nickel hexa-hydratée depuis le circuit de concentration correspondant (C2) lorsque la conductivité électrique dans le circuit de concentration C2 atteint une valeur prédéterminée , correspondant à la concentration souhaitée pour la solution concentrée d'hypohosphite de nickel hexa-hydraté et on introduit périodiquement une certaine quantité de solution de sulfate de nickel hexa-hydratée et d'hypophosphite de sodium dans les deux circuits de dilution D1, D2.

8. Procédé selon la revendication 7 caractérisé en ce que la solution concentrée d'hypophosphite de nickel souhaitée étant à 167 g/l , la conductivité de la solution concentrée à 167 g/l d'hypophosphite de nickel est de 35mS.

9. Procédé selon l'une des revendications 7 ou 8 caractérisé en ce que les ajouts des solutions de sulfate de nickel et d'hypophosphite de sodium interviennent lorsque la conductivité des premier et second circuits de dilution D₁, D₂, descendent en-dessous de seuils prédéterminés.

10. Procédé selon les revendications 8 et 9 caractérisé en ce que les seuils prédéterminés sont de 25mS pour le premier circuit de dilution D₁ (sulfate de nickel) et de 45mS pour le second circuit de dilution D₂ (hypophosphite de sodium).
